# EUROPEAN PATENT SPECIFICATION

(11) **EP 2 905 957 B1**
(45) Date of publication and mention of the grant of the patent: **12.09.2018**
(21) Application number: 15161132.4
(22) Date of filing: 22.02.2008
(51) Int. Cl.: H04N 7/08, H04N 5/00, H04N 7/173, H04N 7/24, H04N 21/235, H04N 21/236, H04N 21/2362, H04N 21/426, H04N 21/434, H04N 21/435, H04N 21/438, H04N 21/472, H04N 21/4722, H04N 21/475, H04N 21/6543, H04N 21/6547, H04N 21/658, H04N 21/84, H04N 21/4147

(54) **Formtext method and apparatus form receiving digital contents through data broadcasting channel**
Formtextverfahren und Vorrichtung für den Empfang digitaler Inhalte über einen Datensendekanal
Procédé de mise en forme de texte et appareil pour recevoir des contenus numériques par l'intermédiaire d'un canal de radiodiffusion

(30) Priority: 03.04.2007 KR 20070032945
(43) Date of publication of application: 12.08.2015
(62) Divisional of application: 08723072.8
(73) Proprietor: Samsung Electronics Co., Ltd., Gyeonggi-do 443-742 (KR)
(72) Inventor: Hyun, Ju-Ho, Suwon-si, Gyeonggi-do 443-821 (KR); Jun, Hae-Sik, Seoul 151-766 (KR)
(74) Representative: Appleyard Lees IP LLP

(56) References cited:
- EP-A2- 1 355 496
- WO-A1-2006/080361
- WO-A2-00/55970
- US-A1- 2003 128 302
- US-A1- 2004 123 326
- US-A1- 2005 044 570
- US-A1- 2005 289 617

## Description

### Technical Field

Methods and apparatuses consistent with the present invention relate to digital broadcasting, and more particularly, to receiving digital contents through a data broadcasting channel.

### Background Art

Since digital broadcasting has begun being commercially used, interest in and the importance of digital broadcasting has increased, wherein the digital broadcasting sends data through a broadcasting stream. Current data broadcasting is mainly restricted to use of relatively small applications. However, it is believed that various digital contents will be supplied and used through digital broadcasting in the future. Therefore, in the near future, relatively large sized digital contents such as MP3s, moving picture files, and software will be provided through digital broadcasting, and various business models, such as product sales through digital broadcasting, will be newly generated. For example, while a music program is on the air from a music broadcasting channel, new songs by singers appearing in the program may be sold or distributed in MP3 form. In addition, in a movie channel, when a movie introducing broadcast is on the air, the introduced movie contents may be sold. Since broadcasting and a purchasing process progress at the same time as a home shopping program, a customer's sudden interest will be induced so that large added value will be created.

In order to embody such a business model, massive amounts of digital contents should be transmitted through a data broadcasting channel. However, there is a technical problem to receive massive amounts of digital contents through a data broadcasting channel.

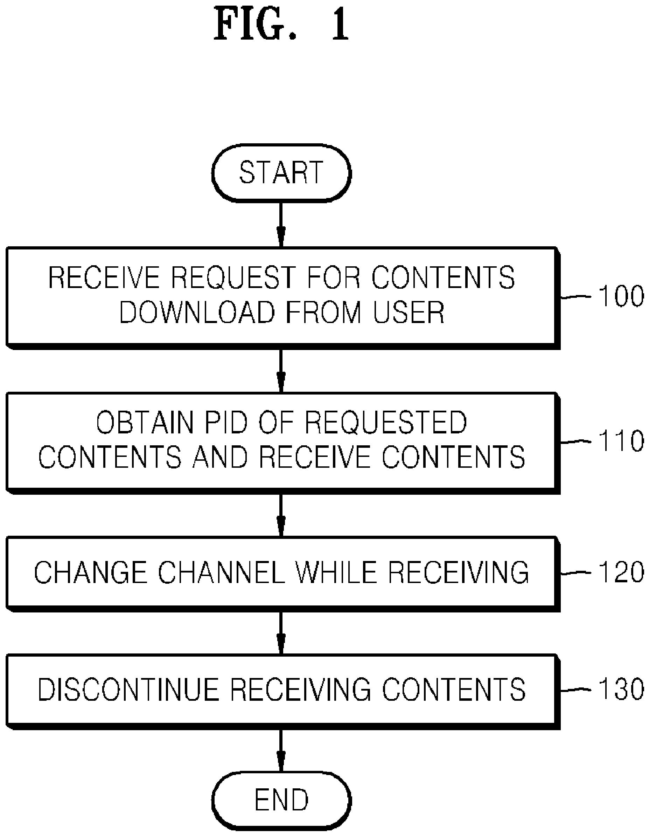

FIG. 1 is a flowchart of a related art method of receiving contents through a data broadcasting channel.

In operation 100, a user designates contents and requests to download the contents.

In operation 110, a data broadcasting receiving device such as digital TV or a set top box analyses a Program Mapping Table (PMT) to obtain a packet ID (PID) of the requested contents and receives contents by using the obtained PID.

In operation 120, the user changes a channel while receiving the contents.

In operation 130, a tuner terminates receiving the contents to change a broadcasting channel.

That is, when a physical channel is changed while receiving the contents through a data broadcasting channel, a tuner receives a different transport stream (TS) and thus transmission of the receiving contents is terminated. Therefore, the user cannot change a channel while receiving massive amounts of contents. If the user changes a channel, the contents need to be completely downloaded again.

Furthermore, even if there are not massive amounts of contents, in the case of contents such as user authentication information or information transmitted/received for payment that should not be terminated while receiving, the user cannot use a service of another channel before transmission of the contents is completed.

US2004/123326, US2003/128302, US2005/044570 and EP 1355496 all describe apparatus having multiple tuners where services are prioritised and allocated to the available tuners according to their priority. WO 00/55970 discloses a system and method for efficiently tuning to channels of a variety of different broadcast types. WO 2006/080361 shows a download execution device capable of preventing at least sudden disturbance of user's view or recording during program download. US 2005/289617 describes a personal versatile recorder that can be connected to, or integrated in, a cable television set-top terminal.

### Disclosure of Invention

### Technical Solution

The present invention provides a method and apparatus for changing a channel while receiving contents through a broadcasting channel.

### Advantageous Effects

According to an exemplary embodiment of the present invention, while receiving contents requested by a user, the user can change a broadcasting channel and use a service provided by another channel in the apparatus for receiving data broadcasting.

In addition, the contents are received by using the idle tuner and thus desired contents can be quickly received.

### Description of Drawings

FIG. 1 is a flowchart of a related art method of receiving contents through a data broadcasting channel;
FIG. 2 is a flowchart of a method of receiving contents according to an exemplary embodiment of the present invention;
FIG. 3 is a flowchart of a process of analyzing contents related information according to an exemplary embodiment of the present invention;
FIG. 4 is a flowchart of an exemplary procedure when an indicator is included in contents;
FIG. 5 shows an example of a message output to a user when it is determined that an indicator is included in contents;
FIG. 6 is a block diagram of an apparatus for receiving data broadcasting according to an exemplary embodiment of the present invention;
FIG. 7 is a flowchart of a method of transmitting data broadcasting according to an exemplary embodiment of the present invention; and
FIG. 8 is a block diagram of an apparatus for transmitting data broadcasting according to an exemplary embodiment of the present invention.

### Best Mode

According to an aspect of the present invention, there is provided a method of receiving data as defined by claim 1 of the claims appended hereto.

The contents related information may comprise at least one of a Program Mapping Table (PMT), an Event Information Table (EIT), and a Download Information Indicator (DII).

The receiving may comprise: searching whether the idle tuner among the tuners exists, in response to the contents being determined to be received by using the idle tuner; receiving the contents by using the idle tuner when it is determined that the idle tuner exists, or completing service provided by at least one tuner from among the used tuners according to a user's input when it is determined that the idle tuner does not exist; and receiving the contents by using the tuner which completes the service.

According to another aspect of the present invention, there is provided a recording medium having embodied thereon a program for executing the method of receiving data.

According to another aspect of the present invention, there is provided an apparatus for receiving data broadcasting including a plurality of tuners as defined by claim 4 of the claims appended hereto.

According to another aspect of the present invention, there is provided a method of transmitting data broadcasting as defined by claim 6 of the claims appended hereto.

The contents related information may comprise at least one of a Program Mapping Table (PMT), an Event Information Table (EIT), and a Download Information Indicator (DII).

According to another aspect of the present invention, there is provided a method of transmitting data broadcasting.

According to another aspect of the present invention, there is provided an apparatus for transmitting data broadcasting as defined by claim 9 of the claims appended hereto.

### Mode for Invention

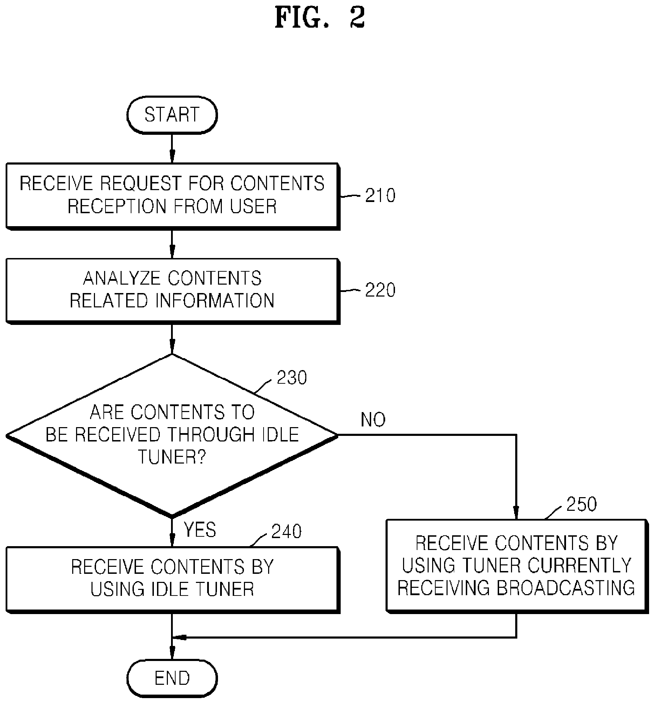

FIG. 2 is a flowchart of a method of receiving contents according to an exemplary embodiment of the present invention.

Recently, two or more tuners are generally included for a Picture In Picture (PIP) or Personal Video Recorder (PVR) function in digital TVs or set top boxes. However, when PIP or PVR is not used, an idle tuner exists while receiving broadcasting. Therefore, in an exemplary embodiment of the present invention, contents are received by using the idle tuner.

In operation 210, a user inputs a command for downloading contents into an apparatus for receiving data broadcasting through a user interface while watching broadcasting.

In operations 220 and 230, the apparatus for receiving data broadcasting analyzes contents related information that is requested by the user and determines the type of contents. In other words, whether the contents requested by the user are the contents that should be received by an idle tuner is determined. As mentioned above, examples of the contents that should be received by using an idle tuner include important contents, such as massive amounts of contents and authentication information, and the type of contents is determined by a broadcasting station from where the contents are provided.

A contents provider selects the contents that should be received through the idle tuner according to the type of contents and then inserts an indicator indicating that the contents corresponding to contents related information should be received through the idle tuner. The information may include various meta data related to contents, for example, a Program Mapping Table (PMT), an Event Information Table (EIT), and a Download Information Indicator (DII). Such information is used in existing data broadcasting. The PMT, EIT, and DII are described in detail in ISO/IEC 13818-1, ETSI EN 300 468, and ISO/IEC 13818-6 standards, respectively and thus a detailed description thereof is omitted here.

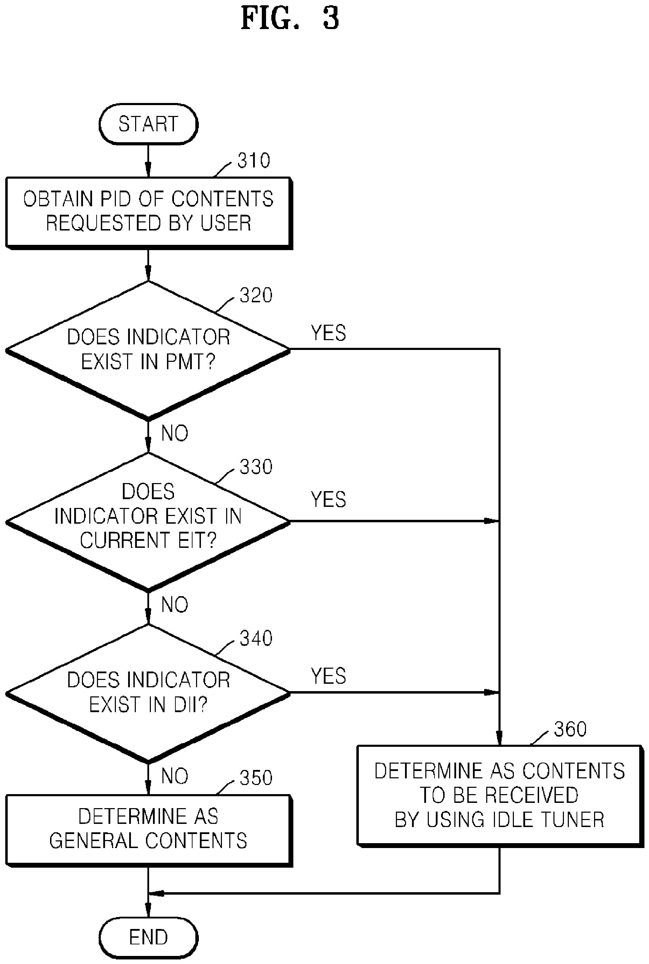

Determining the type of contents in operations 220 and 230 may be performed by examining whether the indicator is included in contents related information. A more detailed description of the exemplary embodiment will be illustrated with reference to FIG. 3.

If the type of contents requested by the user should be received through the idle tuner, the corresponding contents are received by using the idle tuner of the apparatus for receiving data broadcasting in operation 240. If the type of contents requested by the user should not be received through the idle tuner, the corresponding contents are received by using a tuner currently receiving broadcasting in operation 250.

FIG. 3 is a flowchart of a process of analyzing contents related information according to an exemplary embodiment of the present invention.

As mentioned above, the indicator indicating whether the type of contents should be received through the idle tuner may be included in the PMT, EIT, and DII, and more preferably, may be included in any one piece of information. However, in the current exemplary embodiment, it is assumed that the apparatus for receiving data broadcasting does not identify where the indicator is included among the information. All information is examined to determine the type of contents.

In operation 310, the PMT is analyzed to obtain a packet ID (PID) that corresponds to the contents requested by a user.

In operation 320, whether the indicator exists in contents related information requested by the user from the PMT is searched. If the indicator exists, the contents requested by the user are determined as the contents that should be received by using the idle tuner in operation 350. If the indicator does not exist, operation 330 is performed.

In operation 330, the current EIT is searched for the indicator. More specifically, a component tag which is mapping information of the PID is used in the EIT, instead of the PID. In the PMT, a relationship between the PID and the component tag can be determined. Therefore, if the indicator is found in the EIT, the PID corresponding to the corresponding component is detected in the PMT. Then, only when the detected PID corresponds to the PID obtained in operation 310, the contents requested by the user are determined as the contents that should be received through the idle tuner (proceed to operation 350). In other words, when the indicator is found in the EIT but the PID corresponding to the corresponding component tag does not correspond to the PID requested by the user, operation 340 is performed.

In operation 340, the DII is searched for the indicator. When the indicator exists, operation 360 is performed. When the indicator does not exist, operation 350 is performed and the contents requested by the user are determined as general contents.

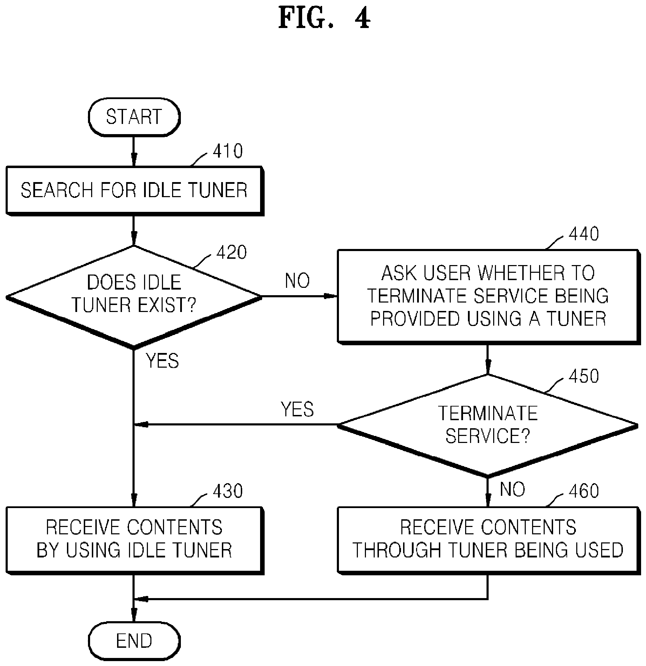

FIG. 4 is a flowchart of an exemplary procedure when an indicator is included in contents. That is, the procedure is that performed when the contents requested by the user are determined to be received by using the idle tuner.

In operations 410 and 420, the idle tuner is searched to determine whether an idle tuner exists in the apparatus for receiving data broadcasting. If an idle tuner exists, the contents requested by the user are received by using the idle tuner. The tuner currently receiving data broadcasting and the tuner receiving the contents requested by the user are different, and therefore the user can change a channel while receiving the contents so as to use a service provided through another channel.

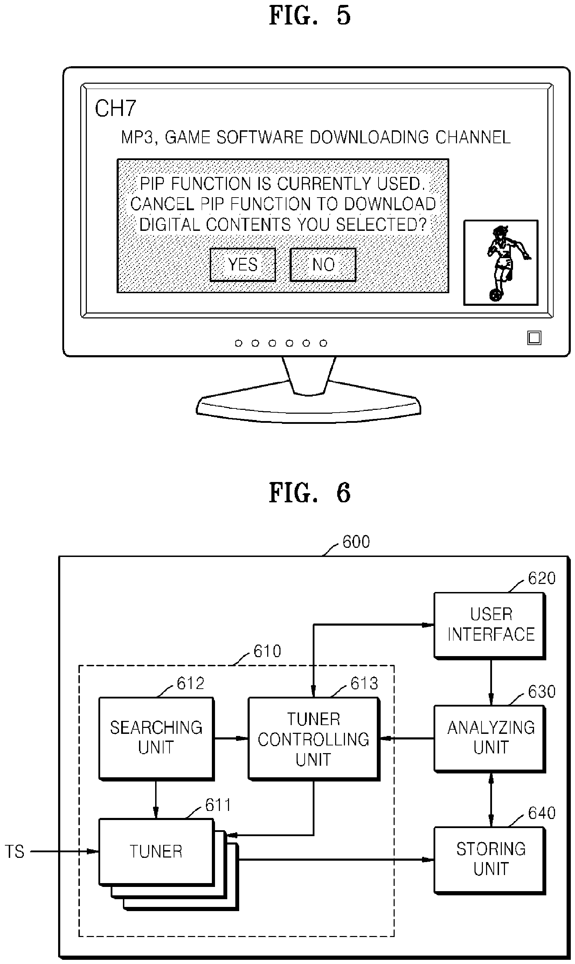

In operations 440 and 450, if the idle tuner does not exist, the apparatus for receiving data broadcasting outputs a message enquiring of the user whether to terminate a service currently being provided through one of the occupied tuners through a user interface. An example of the output message is illustrated in FIG. 5.

If the user desires to terminate a service being provided by one tuner from among occupied tuners to make it idle, operation 430 is performed and if not, operation 460 is performed to receive the contents by using the tuner currently receiving broadcasting. In operation 460, if the user changes a channel before the contents are completely received, reception of the contents would be terminated as in the related art.

FIG. 5 shows an example of a message output to a user if it is determined that an indicator is included in contents.

In the current exemplary embodiment, the user requests to download the contents including the indicator while using services of two channels by using a PIP function of a digital TV and it is assumed that the apparatus for receiving digital broadcasting is equipped with two tuners. Since the idle tuner does not exist in the apparatus for receiving digital broadcasting, the tuner providing PIP service is formed according to the idle tuner and then a message illustrated as in FIG. 5 is output so as to download the contents requested by the user through the idle tuner.

If the user selects 'yes' on the illustrated screen, a football program broadcasted through a PIP service is completed and the tuner used in the PIP service is then used to receive the contents requested by the user. If the user selects 'no', the PIP service is continuously provided and the contents requested by the user is received through the tuner currently receiving broadcasting. However, if the user changes a channel, reception of the contents will be terminated.

FIG. 6 is a block diagram of an apparatus for receiving data broadcasting according to an exemplary embodiment of the present invention.

Referring to FIG. 6, the apparatus for receiving data broadcasting 600 includes a receiving unit 610, a user interface 620, an analyzing unit 630, and a storing unit 640.

The analyzing unit 630 analyzes contents related information that is requested additionally through the user interface 620 while the user watching broadcasting and determines whether the corresponding contents should be received through the idle tuner. As described above, analyzing contents related information is determining whether the indicator is included in the contents related information such as PMT, EIT, and DII.

The receiving unit 610 receives the contents requested by the user through one of a plurality of tuners 611 according to the determination result. The receiving unit 610 includes the plurality of tuners 611, a searching unit 612, and a tuner controlling unit 613. When the contents requested by the user are the contents that should be received through the idle tuner, the searching unit 612 searches for the idle tuner from among the plurality of tuners 611.

When the idle tuner exists according to the searching result, the tuner controlling unit 613 designates the searched idle tuner as the tuner to receive the contents. When the idle tuner does not exist, a message as illustrated in FIG. 5 is output to the user through the user interface 620. When the user selects 'yes' in an example of FIG. 5, the tuner controlling unit 613 completes the service provided by at least one of the currently used tuners to form the idle tuner and then designates the tuner as the tuner to receive the contents requested by the user.

The storing unit 640 stores various data received through the receiving unit 610 such as a broadcasting stream, the contents requested by the user, and the PMT.

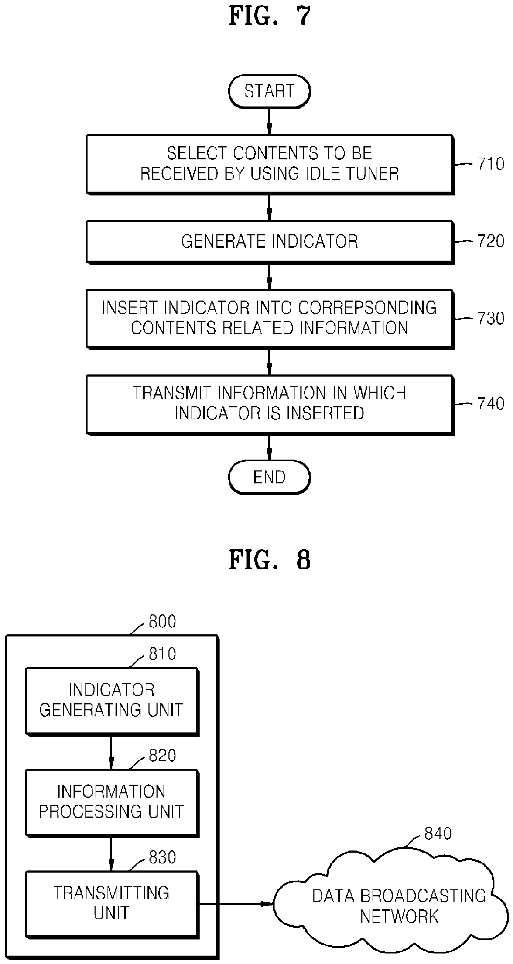

FIG. 7 is a flowchart of a method of transmitting data broadcasting according to an exemplary embodiment of the present invention.

In operation 710, the contents to be received by using the idle tuner is selected from among various contents provided through a data broadcasting channel.

In operation 720, an indicator indicating the contents to be received by using the idle tuner is generated.

In operation 730, the generated indicator is inserted into contents related information. Here, the information may be the PMT, EIT, and DII as mentioned above.

In operation 740, the indicator transmits the inserted information through a data broadcasting channel.

FIG. 8 is a block diagram of an apparatus for transmitting data broadcasting according to an exemplary embodiment of the present.

Referring to FIG. 8, the apparatus for transmitting data broadcasting 800 includes an indicator generating unit 810, an information processing unit 820, and a transmitting unit 830.

The indicator generating unit 810 generates the indicator indicating the contents to be received by using the idle tuner and the information processing unit 820 inserts the generated indicator into information such as the PMT, EIT, and DII.

The transmitting unit 830 transmits information, in which the indicator is inserted, through a data broadcasting network 840.

The exemplary embodiments of the present invention can be written as computer programs and can be implemented in general-use digital computers that execute the programs using a computer readable recording medium. Examples of the computer readable recording medium include magnetic storage media (e.g., ROM, floppy disks, hard disks, etc.), optical recording media (e.g., CD-ROMs, or DVDs), and storage media such as carrier waves (e.g., transmission through the Internet).

According to an exemplary embodiment of the present invention, while receiving contents requested by a user, the user can change a broadcasting channel and use a service provided by another channel in the apparatus for receiving data broadcasting. In addition, the contents are received by using the idle tuner and thus desired contents can be quickly received.

While the present invention has been particularly shown and described with reference to exemplary embodiments thereof, it will be understood by those of ordinary skill in the art that various changes in form and details may be made therein without departing from the spirit and scope of the present invention as defined by the following claims.

According to other aspects, embodiments of the invention can provide at least some of the following:
A method of receiving data in an apparatus for receiving data broadcasting, the method comprising: analyzing information related to contents which is requested by a user while receiving broadcasting; and selectively receiving the contents through an idle tuner from among a plurality of tuners, according to the analysis result.

The analyzing can comprise determining if an indicator which indicates that the requested contents should be received through an idle tuner is included in the contents related information.

The contents related information can comprise at least one of a Program Mapping Table (PMT), an Event Information Table (EIT), and a Download Information Indicator (DII).

The determining can comprise searching the at least one of a PMT, EIT and DII for the indicator.

The receiving can comprise: searching whether the idle tuner among the tuners exists, when the contents are determined to be received by using the idle tuner; receiving the contents by using the idle tuner if it is determined that the idle tuner exists.

The method can further comprise: completing service provided by at least one tuner from among a plurality used tuners according to a user's input if it is determined that the idle tuner does not exist; and receiving the contents by using the at least one tuner from among the plurality of used tuners.

A recording medium having embodied thereon a program for executing a method of receiving data in an apparatus for receiving data broadcasting, the method comprising: analyzing information related to contents which is requested by a user while receiving broadcasting; and selectively receiving the contents through an idle tuner from among a plurality of tuners, according to the analysis result.

An apparatus for receiving data broadcasting including a plurality of tuners, the apparatus comprising: an analyzing unit which analyzes information related to contents that are requested by a user while receiving broadcasting; and a receiving unit which selectively receives the contents through an idle tuner from among the plurality of tuners, according to the analysis result.

The analyzing unit may determine if an indicator which indicates that the requested contents should be received through an idle tuner is included in the contents related information.

The contents related information may comprise at least one of a Program Mapping Table (PMT), an Event Information Table (EIT), and a Download Information Indicator (DII).

The analyzing unit may determine if the indicator is included by searching the at least one of a PMT, EIT and DII for the indicator.

The receiving unit may comprise: a searching unit which searches whether the idle tuner among the tuners exists, in response to the contents being determined to be received by using the idle tuner; a tuner controlling unit which designates the found idle tuner as the tuner to receive the contents in response to the determination that the idle tuner exists.

The tuner controlling unit may designate at least one tuner from among a plurality of used tuners to receive the contents according to a user's input in response to the idle tuner not existing; and receiving the contents by using the at least one tuner from among the plurality of used tuners.

A method of transmitting data broadcasting, the method comprising: generating an indicator which indicates that contents should be received by using an idle tuner in a reception side; inserting the generated indicator into corresponding contents related information; and transmitting the information to the reception side.

The contents related information may comprise at least one of a Program Mapping Table (PMT), an Event Information Table (EIT), and a Download Information Indicator (DII).

A recording medium having embodied thereon a program for executing a method of transmitting data broadcasting, the method comprising: generating an indicator which indicates that contents should be received by using an idle tuner in a reception side; inserting the generated indicator into corresponding contents related information; and transmitting the information to the reception side.

An apparatus for transmitting data broadcasting comprising: an indicator generating unit which generates an indicator which indicates that contents should be received by using an idle tuner in a reception side; an information processing unit which inserts the generated indicator into corresponding contents related information; and a transmitting unit which transmits the information to the reception side.

The contents related information comprises at least one of a Program Mapping Table (PMT), an Event Information Table (EIT), and a Download Information Indicator (DII).

## Claims

1. A method of receiving data whilst changing a channel in an apparatus (600) for receiving data broadcasting, the method **characterised by**:
analyzing information related to downloadable contents which is requested by a user while receiving broadcasting, wherein the analyzing comprises determining whether an indicator received from a provider of the content which indicates that the requested contents is to be received through an idle tuner (611) in an event of a user change channel request is included in the contents related information;
searching whether the idle tuner (611) among the tuners (611) exists, when the contents are determined to be received by using the idle tuner (611) according to the indicator;
selectively receiving the downloadable contents through the idle tuner (611) from among a plurality of tuners (611), according to the analysis result, and if it is determined that the idle tuner (611) exists;
completing a service provided by at least one tuner (611) providing a Picture In Picture service from among a plurality used tuners (611) according to a user's input if it is determined that the idle tuner (611) does not exist; and
receiving the contents by using the at least one tuner (611) providing the Picture In Picture service from among the plurality of used tuners (611).

2. The method of claim 1, wherein the contents related information comprises at least one of a Program Mapping Table, PMT, an Event Information Table, EIT, and a Download Information Indicator, DII.

3. The method of claim 2, wherein the determining comprises searching the at least one of the PMT, EIT and DII for the indicator.

4. An apparatus (600) for receiving data broadcasting including a plurality of tuners (611), the apparatus (600) **characterised in that**:
an analyzing unit (630) analyzes information related to downloadable contents that are requested by a user while receiving broadcasting, wherein the analyzing unit (630) determines whether an indicator received from a provider of the content which indicates that the requested contents is to be received through an idle tuner (611) in an event of a user change channel request is included in the contents related information;
a searching unit (612) which searches whether the idle tuner (611) among the tuners (611) exists, in response to the contents being determined to be received by using the idle tuner (611);
a receiving unit (610) selectively receives the downloadable contents through the idle tuner (611) from among the plurality of tuners (611), according to the analysis result and if it is determined that the idle tuner (611) exists;
the receiving unit (610) completing a service provided by at least one said tuner (611) providing a Picture In Picture service from among a plurality used said tuners (611) according to a user's input if it is determined that the idle tuner (611) does not exist; and
the receiving unit (610) receiving the contents by using the at least one said tuner (611) providing the Picture In Picture service from among the plurality of used tuners (611).

5. The apparatus of claim 4, wherein the contents related information comprises at least one of a Program Mapping Table, PMT, an Event Information Table, EIT, and a Download Information Indicator, DII.

6. A method of transmitting data broadcasting, the method **characterised by**:
a provider of content:
generating an indicator which indicates that downloadable contents is to be received by using an idle tuner (611) in a reception side in an event of a user change channel request; and
inserting the generated indicator into corresponding contents related information; and
transmitting the information to a reception device configured to perform a method according to claim 1.

7. The method of claim 6, wherein the contents related information comprises at least one of a Program Mapping Table, PMT, an Event Information Table, EIT, and a Download Information Indicator, DII.

8. A computer-readable recording medium having embodied thereon a program for performing the steps as set forth in any of claims 1-3 or claims 6-7.

9. An apparatus for transmitting data broadcasting, **characterised in that**:
an indicator generating unit (810) is arranged to generate an indicator provided by a provider of the content which indicates that downloadable contents is to be received by using an idle tuner in a reception side in an event of a user change channel request;
an information processing unit (820) inserts the generated indicator into corresponding contents related information; and
a transmitting unit (830) transmits the information to apparatus (600) for receiving data broadcasting according to claim 4.

## Patentansprüche

1. Verfahren zum Empfangen von Daten, während ein Kanal in einer Vorrichtung (600) zum Empfangen eines Datenrundfunks geändert wird, wobei das Verfahren durch Folgendes gekennzeichnet ist:
Analysieren von Informationen bezüglich herunterladbaren Inhalten, die durch einen Benutzer angefordert werden, während Rundfunk empfangen wird, wobei das Analysieren ein Bestimmen umfasst, ob ein Indikator, der von einem Anbieter des Inhalts empfangen wird und angibt, dass die angeforderten Inhalte in einem Fall einer Benutzerkanaländerungsanforderung über einen freien Kanalwähler (611) empfangen werden sollen, in den inhaltsbezüglichen Informationen enthalten ist;
Suchen, ob der freie Kanalwähler (611) unter den Kanalwählern (611) vorhanden ist, wenn gemäß dem Indikator bestimmt wird, dass die Inhalte unter Verwendung des freien Kanalwählers (611) empfangen werden sollen;
selektives Empfangen der herunterladbaren Inhalte über den freien Kanalwähler (611) aus mehreren Kanalwählern (611) gemäß dem Analyseergebnis und falls bestimmt wird, dass der freie Kanalwähler (611) vorhanden ist;
Ausführen eines Dienstes, der durch mindestens einen Kanalwähler (611), der einen Bild-im-Bild-Dienst bereitstellt, aus mehreren verwendeten Kanalwählern (611) bereitgestellt wird, gemäß einer Benutzereingabe, falls bestimmt wird, dass der freie Kanalwähler (611) nicht vorhanden ist; und
Empfangen der Inhalte unter Verwendung des mindestens einen Kanalwählers (611), der den Bild-im-Bild-Dienst bereitstellt, aus den mehreren verwendeten Kanalwählern (611).

2. Verfahren nach Anspruch 1, wobei die inhaltsbezüglichen Informationen eine Programmabbildungstabelle bzw. PMT und/oder eine Ereignisinformationstabelle bzw. EIT und/oder einen Downloadinformationsindikator bzw. DII umfassen.

3. Verfahren nach Anspruch 2, wobei das Bestimmen ein Durchsuchen der PMT und/oder der EIT und/oder des DII nach dem Indikator umfasst.

4. Vorrichtung (600) zum Empfangen von Datenrundfunk einschließlich mehrerer Kanalwähler (611), wobei die Vorrichtung (600) **dadurch gekennzeichnet ist, dass**:
eine Analyseeinheit (630) Informationen bezüglich herunterladbaren Inhalten, die durch einen Benutzer angefordert werden, während Rundfunk empfangen wird, analysiert, wobei die Analyseeinheit (630) bestimmt, ob ein Indikator, der von einem Anbieter des Inhalts empfangen wird und angibt, dass die angeforderten Inhalte in einem Fall einer Benutzerkanaländerungsanforderung über einen freien Kanalwähler (611) empfangen werden sollen, in den inhaltsbezüglichen Informationen enthalten ist;
eine Sucheinheit (612), die sucht, ob der freie Kanalwähler (611) unter den Kanalwählern (611) vorhanden ist, als Reaktion darauf, dass bestimmt wird, dass die Inhalte unter Verwendung des freien Kanalwählers (611) empfangen werden sollen;
eine Empfangseinheit (610) selektiv die herunterladbaren Inhalte über den freien Kanalwähler (611) aus den mehreren Kanalwählern (611) gemäß dem Analyseergebnis und falls bestimmt wird, dass der freie Kanalwähler (611) vorhanden ist, empfängt;
die Empfangseinheit (610) einen Dienst, der durch den mindestens einen Kanalwähler (611), der einen Bild-im-Bild-Dienst bereitstellt, aus den mehreren verwendeten Kanalwählern (611) bereitgestellt wird, gemäß einer Benutzereingabe ausführt, falls bestimmt wird, dass der freie Kanalwähler (611) nicht vorhanden ist; und
die Empfangseinheit (610) die Inhalte unter Verwendung des mindestens einen Kanalwählers (611), der den Bild-im-Bild-Dienst bereitstellt, aus den mehreren verwendeten Kanalwählern (611) empfängt.

5. Vorrichtung nach Anspruch 4, wobei die inhaltsbezüglichen Informationen eine Programmabbildungstabelle bzw. PMT und/oder eine Ereignisinformationstabelle bzw. EIT und/oder einen Downloadinformationsindikator bzw. DII umfassen.

6. Verfahren zum Übertragen von Datenrundfunk, wobei das Verfahren durch Folgendes gekennzeichnet ist:
einen Inhaltsanbieter, der:
einen Indikator erzeugt, der angibt, dass herunterladbare Inhalte unter Verwendung eines freien Kanalwählers (611) in einem Fall einer Benutzerkanaländerungsanforderung an einer Empfangsseite empfangen werden sollen; und
den erzeugten Indikator in entsprechende inhaltsbezügliche Informationen einfügt; und
die Informationen zu einer Empfangseinrichtung überträgt, die dazu ausgelegt ist, ein Verfahren nach Anspruch 1 durchzuführen.

7. Verfahren nach Anspruch 6, wobei die inhaltsbezüglichen Informationen eine Programmabbildungstabelle bzw. PMT und/oder eine Ereignisinformationstabelle bzw. EIT und/oder einen Downloadinformationsindikator bzw. DII umfassen.

8. Computerlesbares Aufzeichnungsmedium mit einem darauf umgesetzten Programm zum Durchführen der in einem beliebigen der Ansprüche 1-3 oder Ansprüche 6-7 dargelegten Schritte.

9. Vorrichtung zum Übertragen von Datenrundfunk, **dadurch gekennzeichnet, dass**:
eine Indikatorerzeugungseinheit (810) dazu eingerichtet ist, einen Indikator zu erzeugen, der durch einen Anbieter des Inhalts bereitgestellt wird und angibt, dass herunterladbare Inhalte unter Verwendung eines freien Kanalwählers in einem Fall einer Benutzerkanaländerungsanforderung an einer Empfangsseite empfangen werden sollen;
eine Informationsverarbeitungseinheit (820) den erzeugten Indikator in entsprechende inhaltsbezügliche Informationen einfügt; und
eine Übertragungseinheit (830) die Informationen zu einer Vorrichtung (600) zum Empfangen eines Datenrundfunks nach Anspruch 4 überträgt.

## Revendications

1. Procédé de réception de données tout en changeant de canal dans un appareil (600) pour recevoir une radiodiffusion de données, le procédé étant **caractérisé par** les étapes consistant à :
analyser des informations concernant un contenu téléchargeable qui est demandé par un utilisateur pendant la réception d'une radiodiffusion, dans lequel l'analyse comprend la détermination qu'un indicateur reçu d'un fournisseur du contenu qui indique que le contenu demandé doit être reçu par un syntoniseur inactif (611) dans le cas d'une demande utilisateur de changement de canal est compris ou non dans les informations concernant le contenu ;
chercher si le syntoniseur inactif (611) parmi les syntoniseurs (611) existe lorsqu'il est déterminé que le contenu doit être reçu en utilisant le syntoniseur inactif (611) selon l'indicateur ;
recevoir sélectivement le contenu téléchargeable par le syntoniseur inactif (611) parmi une pluralité de syntoniseurs (611) selon le résultat d'analyse, et s'il est déterminé que le syntoniseur inactif (611) existe ;
achever un service fourni par au moins un syntoniseur (611) fournissant un service d'incrustation d'image parmi une pluralité utilisée de syntoniseurs (611) selon une entrée de l'utilisateur s'il est déterminé que le syntoniseur inactif (611) n'existe pas ; et
recevoir le contenu en utilisant ledit au moins un syntoniseur (611) fournissant le service d'incrustation d'image parmi la pluralité de syntoniseurs (611) utilisés.

2. Procédé selon la revendication 1, dans lequel les informations concernant le contenu comprennent au moins un élément parmi une table de mappage de programme, PMT, une table d'informations d'événement, EIT, et un indicateur d'informations de téléchargement, DII.

3. Procédé selon la revendication 2, dans lequel la détermination comprend la recherche de l'indicateur dans ledit au moins un élément parmi la PMT, la EIT et le DII.

4. Appareil (600) pour recevoir des données de radiodiffusion, comprenant une pluralité de syntoniseurs (611), l'appareil (600) étant **caractérisé en ce que** :
une unité d'analyse (630) analyse des informations concernant un contenu téléchargeable qui est demandé par un utilisateur pendant la réception d'une radiodiffusion, dans lequel l'unité d'analyse (630) détermine si un indicateur reçu d'un fournisseur du contenu qui indique que le contenu demandé doit être reçu par un syntoniseur inactif (611) dans le cas d'une demande utilisateur de changement de canal est compris dans les informations concernant le contenu ;
une unité de recherche (612) qui cherche si le syntoniseur inactif (611) parmi les syntoniseurs (611) existe, en réponse à la détermination que le contenu doit être reçu en utilisant le syntoniseur inactif (611) ;
une unité de réception (610) reçoit sélectivement le contenu téléchargeable par le syntoniseur inactif (611) de la pluralité de syntoniseurs (611) selon le résultat d'analyse, et s'il est déterminé que le syntoniseur inactif (611) existe ;
l'unité de réception (610) achevant un service fourni par ledit au moins un syntoniseur (611) fournissant un service d'incrustation d'image parmi une pluralité utilisée des syntoniseurs (611) selon une entrée de l'utilisateur s'il est déterminé que le syntoniseur inactif (611) n'existe pas ; et
l'unité de réception (610) recevant le contenu en utilisant ledit au moins syntoniseur (611) fournissant le service d'incrustation d'image parmi la pluralité de syntoniseurs (611) utilisés.

5. Appareil selon la revendication 4, dans lequel les informations concernant le contenu comprennent au moins un élément parmi une table de mappage de programme, PMT, une table d'informations d'événement, EIT, et un indicateur d'informations de téléchargement, DII.

6. Procédé de transmission de radiodiffusion de données, le procédé étant **caractérisé par** :
un fournisseur de contenu :
générant un indicateur qui indique que le contenu téléchargeable doit être reçu en utilisant un syntoniseur inactif (611) du côté réception dans le cas d'une demande utilisateur de changement de canal ; et
insérant l'indicateur généré dans des informations concernant le contenu correspondantes ; et
transmettant les informations à un dispositif de réception configuré pour effectuer un procédé selon la revendication 1.

7. Procédé selon la revendication 6, dans lequel les informations concernant le contenu comprennent au moins un élément parmi une table de mappage de programme, PMT, une table d'informations d'événement, EIT, et un indicateur d'informations de téléchargement, DII.

8. Support d'enregistrement lisible par ordinateur, sur lequel est réalisé un programme pour effectuer les étapes selon l'une quelconque des revendications 1 à 3 ou des revendications 6 à 7.

9. Appareil de transmission de données de radiodiffusion, **caractérisé en ce que** :
une unité de génération d'indicateur (810) est agencée pour générer un indicateur fourni par un fournisseur du contenu qui indique que du contenu téléchargeable doit être reçu en utilisant un syntoniseur inactif du côté réception dans le cas d'une demande utilisateur de changement de canal ;
une unité de traitement d'informations (820) insère l'indicateur généré dans des informations concernant le contenu correspondantes ; et
une unité de transmission (830) transmet les informations à l'appareil (600) pour recevoir des données selon la revendication 4.
